# EUROPÄISCHE PATENTSCHRIFT

(11) **EP 2 872 304 B1**
(45) Veröffentlichungstag und Bekanntmachung des Hinweises auf die Patenterteilung: **16.05.2018**
(21) Anmeldenummer: 13732905.8
(22) Anmeldetag: 28.06.2013
(51) Int. Cl.: B29B 7/76, B29B 7/80, F16K 31/126, F16K 41/10

(54) **ZUFUHRDÜSE FÜR POLYMERE KOMPONENTEN**
FEED NOZZLE FOR POLYMERIC COMPONENTS
BUSE D'ALIMENTATION POUR DES COMPOSANTS POLYMERIQUES

(30) Priorität: 11.07.2012 DE 102012106230
(43) Veröffentlichungstag der Anmeldung: 20.05.2015
(73) Patentinhaber: KraussMaffei Technologies GmbH, 80997 München (DE)
(72) Erfinder: MOSER, Ralf, 80796 München (DE); RENKL, Josef, 85229 Markt Indersdorf (DE)
(74) Vertreter: Roider, Stephan
(86) Internationale Anmeldenummer: PCT/EP2013/063581
(87) Internationale Veröffentlichungsnummer: WO 2014/009172

(56) Entgegenhaltungen:
- WO-A1-2012/088666
- DE-A1- 1 926 781
- DE-A1- 2 360 154
- DE-A1- 10 020 157
- DE-U1- 8 328 350
- GB-A- 2 136 539
- US-A- 3 084 901
- US-A- 3 084 901
- US-A1- 2006 118 753
- US-B2- 7 461 829

## Beschreibung

Die Erfindung betrifft eine Komponentenzufuhrdüse nach dem Oberbegriff von Anspruch 1.

Eine solche Komponentenzufuhrdüse ist beispielsweise aus der DE 10 2007 037 780 A1 bekannt und hat ein Gehäuse, in dem ein Verschlusskörper, oft als Düsennadel bezeichnet, beweglich zwischen wenigstens zwei Positionen gelagert ist. In dem Gehäuse sind ein Komponenteneinlass und ein Komponentenauslass ausgebildet, wobei der Verschlusskörper den Komponentenauslass verschließt, wenn er sich in einer bestimmten Position befindet. Um bei solchen Komponentenzufuhrdüsen eine Mengenverstellung zu verwirklichen, ist der Verschlusskörper in der Regel in Schließrichtung vorgespannt. Der Komponentenauslass ist demnach verschlossen, wenn keine Komponente zugeführt wird. Wird jedoch eine Komponente zugeführt und baut sich in der Komponentenzufuhrdüse eine ausreichend hoher Druck auf, so bewegt sich der Verschlusskörper aus der Schließstellung und gibt den Komponentenauslass frei.

Die DE 100 20 157 A1 offenbart eine Düseneinrichtung mit einem sich in Düsenrichtung erstreckenden, eigensteifen, metallischen Faltenbalg, der zwischen dem Düsengehäuse und dem Düsenkolben angeordnet ist. Innerhalb des Faltenbalgs ist eine Vorspannfeder angeordnet, welche sich am Düsengehäuse und an der Rückseite des Düsenkolbens abstützt.

Die DE 23 60 154 A1 beschreibt einen Spitzkopf mit einer Ventileinrichtung. Die Ventileinrichtung weist einen Ventilkörper und einen Ventilsitz auf. Der Ventilkörper ist an einer Membran befestigt, die ihrerseits am Ventilgehäuse befestig ist.

Die US 7,461,829 B2 offenbart ein Ventil, bei dem der Verschlusskörper lose durch eine Öffnung des Gehäuses hindurchgeschoben und nicht im Gehäuse gelagert ist. Die Druckschrift US 3,084,901 A1 zeigt ein herkömmliches Ventil mit einem Verschlusskörper, der durch eine Bohrung des Gehäuses hindurchgeschoben ist. Diese ist mit geeigneten Ausnehmungen versehen, um eine federvorgespannte Dichtungsvorrichtung aufzunehmen, die zwar eine axiale Bewegung des Verschlusskörpers erlaubt, aber das Eindringen von Fluid verhindert. Ein länglicher Balg ist in einer Gegenbohrung aufgenommen und umgibt das obere Ende des Verschlusskörpers. Diese Schrift zeigt somit eine Dichtungsvorrichtung, bei der ein Eindringen von Fluid in den Balgraum des Balgs gerade verhindert wird und keine zusätzliche Kraft zum Schließen des Ventils aufgebracht werden muss. Die dort im Text genannte Leckage ("seepage") soll vermieden werden und stellt lediglich ein ungewolltes Eindringen von Fluid in den Balgraum aufgrund langer Laufzeiten oder Standzeiten dar. Im Gegensatz dazu ist erfindungsgemäss ein aktives Strömen von Fluid vom Komponentenraum in dem Wirkraum gewollt, so dass der Komponentendruck vollständig auf der kompletten Wirkfläche der Membran anliegt. Zudem würde ein gewolltes und aktives Einströmen von Fluid in den Balgraum des Balgs der US 3,084,901 A1 die Dichtwirkung der Dichtungsvorrichtung vereiteln, so dass immer höhere Schliesskräfte aufgebracht werden müssten.

Es ist die Aufgabe der Erfindung, eine verbesserte Komponentenzufuhrdüse zu schaffen, die auf Komponentenmengenänderungen genauer reagieren kann. Diese Aufgabe wird von einer Komponentenzufuhrdüse mit den Merkmalen von Anspruch 1 gelöst. Vorteilhafte Weiterbildungen sind Gegenstand der abhängigen Ansprüche.

Erfindungsgemäß hat die Komponentenzufuhrdüse eine Membrandichtung, die am hinteren Ende des Verschlusskörpers und am Gehäuse befestigt ist, so dass sich der Verschlusskörper vollständig auf einer Seite der Membrandichtung befindet, wobei das Gehäuse und/oder der Verschlusskörper so ausgebildet sind, dass die Komponente an die Membrandichtung gelangen kann. Dabei ist eine

Ausgestaltung möglich, bei der die Komponente an alle freiliegenden Flächen, insbesondere an die Umfangsflächen des Verschlusskörpers gelangen kann. Anders gesagt kann die Lagerung des Verschlusskörpers schwimmend und in der Art eines Gleitlagers erfolgen. Dabei ist neben der Membrandichtung keine weitere Dichtung an dem Verschlusskörper vorgesehen, so dass bei einer Bewegung des Verschlusskörpers möglichst wenig Reibung entsteht.

Der Verschlusskörper hat einen Führungsabschnitt, der in dem Gehäuse gleitgelagert ist. Eine radiale Bewegung des Verschlusskörpers wird somit durch das Gehäuse begrenzt wobei der Führungsabschnitt teilweise in Kontakt mit dem Gehäuse gelangen kann. Der Verschlusskörper hat des Weiteren einen komponentenauslassseitigen Verschlussabschnitt, der mit dem Gehäuse einen Komponentenraum festlegt, einen am hinteren Ende des Verschlusskörpers ausgeformten Wirkabschnitt, der mit dem Gehäuse und der Membrandichtung einen Wirkraum festlegt, wobei der Komponentenraum und der Wirkraum fluidverbunden sind. Somit kann die Komponente und vor allem der Komponentendruck möglichst einfach an die Flächen des Verschlusskörpers gelangen.

Besonders vorteilhaft ist es, wenn der Verschlusskörper im Bereich des Führungsabschnitts wenigstens eine axiale Nut aufweist, die den Komponentenraum mit dem Wirkraum verbindet oder der Verschlusskörper wenigstens eine Bohrung aufweist, die den Komponentenraum mit dem Wirkraum verbindet. Somit kann ein Druckausgleich zwischen dem Komponentenraum und dem Wirkraum effizient erfolgen.

Es ist wünschenswert, wenn die dem Wirkraum entgegengesetzte Seite der Membrandichtung mit dem Gehäuse einen Druckraum festlegt und in dem Gehäuse ein in den Druckraum mündender Fluidkanal ausgebildet ist. Dem Druckraum kann durch den Fluidkanal ein druckbeaufschlagtes Fluid, beispielsweise Stickstoff, zugeführt werden. An der Membran herrscht dann ein Druckgleichgewicht zwischen dem Komponentendruck und dem Fluiddruck in dem Druckraum, wodurch sich unabhängig von der Austragsleistung bzw. Fördermenge der Komponente stets der gleiche oder zumindest ähnliche Komponentendruck wie derjenige im Druckraum einstellt.

In dem Fluidkanal kann eine Drossel vorgesehen sein. Diese sorgt dafür, dass das Fluid in dem Druckraum mit nur begrenzter Geschwindigkeit aus dem Druckraum strömen kann. Die Drossel wirkt somit als Dämpfungselement, das eine Schwingung des Verschlusskörpers verhindern kann.

Des Weiteren kann an den Fluidkanal ein Druckspeicher angeschlossen sein, um eine ausreichende Menge an druckbeaufschlagtem Fluid zur Verfügung zu stellen. Es ist auch möglich, einen mit dem Druckraum in Reihe geschalteten Hydraulikkolben oder eine weitere über eine Hydraulik mit Druck beaufschlagbare Membran anzuordnen, um den Komponentenauslass auch gegen den herrschenden Komponentendruck zu verwirklichen. Dadurch ist ein zwangsweises Schließen des Komponentenauslasses möglich.

Auch kann ein Federelement auf der dem Wirkraum abgewandten Seite der Membrandichtung vorgesehen sein, die auf die Membrandichtung eine Kraft aufbringt. Ein solches Federelement kann in dem vorstehenden Druckraum zusätzlich bzw. unterstützend angeordnet werden. Alternativ kann das Federelement als Ersatz für den Druckraum angeordnet werden, so dass nur das Federelement die für ein Kräftegleichgewicht an der Membran erforderliche Kraft in Schließrichtung des Verschlusskörpers aufbringt.

Die Membrandichtung kann eine Sickenmembran oder eine Rollmembran sein. Die Membrandichtung ist derart an dem hinteren Ende des Verschlusskörpers befestigt, dass deren gewölbter Abschnitt in Richtung Komponentenauslass vorsteht. Bei Verwendung einer Sickenmembran oder einer Rollmembran kann in dem Gehäuse eine ringförmige Ausnehmung vorgesehen sein, in die der gewölbte Abschnitt der Membrandichtung ragt, wobei die Ausnehmung derart ausgestaltet ist, dass der gewölbte Abschnitt an der sich in radialer Richtung erstreckenden Fläche der Ausnehmung anlegt, wenn die Membran nur auf der Seite des Druckraumes mit Druck beaufschlagt ist. Dies hat den Vorteil, dass die Membrandichtung abgestützt wird, wenn in der Druckkammer ein hoher Druck herrscht. Die Funktionsfähigkeit der Membrandichtung wird dadurch in höherem Maße gewährleistet, da durch die Abstützung ein Reißen der Membrandichtung vermieden wird.

Die Membrandichtung kann über einen Anpressteller an dem Verschlusskörper befestigt sein. Dieser Anpressteller fixiert die Membran an dem hinteren Ende des Verschlusskörpers und kann auf seiner der Membran abgewandten Seite radial verlaufende Nuten aufweisen. Zur Befestigung der Membran am Verschlusskörper kann beispielsweise eine Schraube verwendet werden. Das Vorsehen von Nuten im Anpressteller ist insbesondere dann wichtig, wenn der Anpressteller gleichzeitig als Anschlagelement verwendet wird, also die Bewegung des Verschlusskörpers durch Kontakt mit dem Gehäuse begrenzt, und dieser gleichzeitig den Fluidkanal abdeckt. Durch die Nuten ist dann trotzdem eine Fluidzufuhr aus dem Fluidkanal möglich.

Der Durchmesser des Wirkabschnitts kann größer als der Durchmesser des Führungsabschnitts sein und das Gehäuse kann eine Ausnehmung aufweisen, in der der Wirkabschnitt in dem Gehäuse aufgenommen ist. Anders gesagt kann die Innenwand des Gehäuses der Form des Verschlusskörpers folgend stufenartig ausgebildet sein.

Das Gehäuse kann ein erstes Gehäuseelement und ein zweites Gehäuseelement aufweisen, wobei das erste Gehäuseelement den Komponenteneinlass und den Komponentenauslass aufweisen kann und den Verschlusskörper in sich aufnehmen kann und das zweite Gehäuseelement eine dem Komponentenauslass gegenüberliegende Öffnung das ersten Gehäuseelements verschließen kann, wobei die Membrandichtung zwischen dem ersten und dem zweiten Gehäuseelement gehalten werden, insbesondere eingeklemmt sein kann.

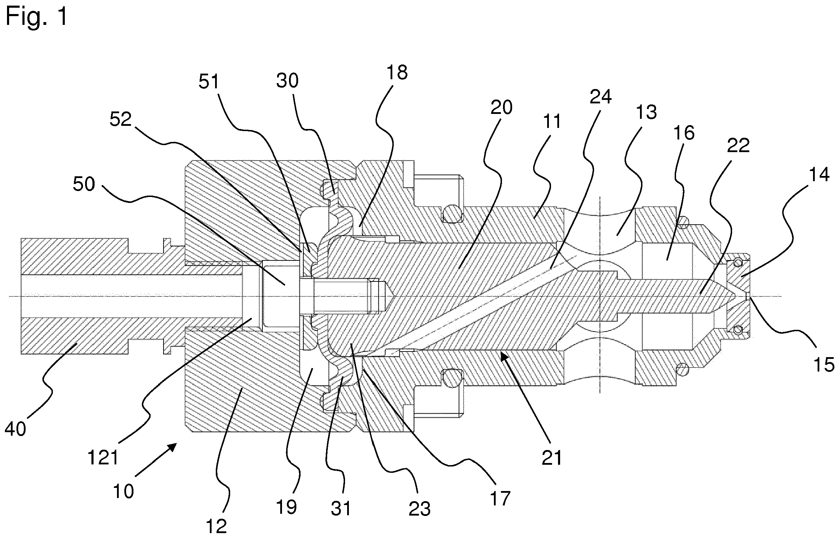

Weitere Merkmale und Vorteile der Erfindung ergeben sich aus dem nachfolgenden Ausführungsbeispiel, welches unter Bezugnahme auf Figur 1 beschrieben wird, die eine Längsschnittansicht einer erfindungsgemäßen Komponentenzufuhrdüse zeigt.

Die in Figur 1 gezeigte Komponentenzufuhrdüse 10 hat ein mehrteiliges Gehäuse, das ein erstes Gehäuseelement 11, auch Patrone genannt, und ein zweites Gehäuseelement 12, welches auch als Deckel bezeichnet werden kann, aufweist.

Das erste Gehäuseelement 11 ist röhrenartig ausgebildet und ist an seinem hinteren Ende teilweise in dem zweiten Gehäuseelement 11 aufgenommen. Das Gehäuse wird üblicherweise mit dem ersten Gehäuseelement 11 in das Kopfstück eines Mischkopfes eingesetzt und wird durch eine Zulaufbohrung mit der Komponente versorgt.

Ein Verschlusskörper, der in dem vorliegenden Ausführungsbeispiel als Düsennadel 20 verwirklicht ist, ist in dem Gehäuse bzw. dem ersten Gehäuseelement 11 und dem zweiten Gehäuseelement 12 axial verschieblich aufgenommen. Dabei hat die Düsennadel 20 einen Führungsabschnitt 21, an dem die Düsennadel 20 unmittelbar an dem ersten Gehäuseelement 11 gelagert ist. Zu diesem Zweck ist das erste Gehäuseelement 11 hohlzylindrisch ausgebildet, wobei der Innendurchmesser des ersten Gehäuseelements 11 an der Lagerstelle größer als der Außendurchmesser des Führungsabschnitts 21 der Düsennadel 20 ist. Die Düsennadel 20 ist also mit einem gewissen Spiel in dem ersten Gehäuseelement 11 gelagert, welches so gewählt ist, dass eine reibungsarme Beweglichkeit bei gleichzeitig ausreichender Führung der Düsennadel 20 gegeben ist. Die Lagerung der Düsennadel ist somit als Gleitlagerung verwirklicht. Allerdings ist die Lagerung der Düsennadel nicht dichtend ausgestaltet.

Am vorderen Ende des ersten Gehäuseelements 11 ist eine Düse 14 vorgesehen, in der ein Komponentenauslass 15 ausgebildet ist. Mit der Düsennadel 20 bzw. deren vorderem Ende, kann der Komponentenauslass 15 verschlossen, freigegeben oder teilweise freigegeben werden. Des Weiteren ist in dem ersten Gehäuseelement 11 ein Komponenteneinlass 13 vorgesehen, über den eine reaktive Komponente in die Komponentenzufuhrdüse eingebracht werden kann. Befindet sich die Düsennadel 20 in der Stellung, in der der Komponentenauslass 15 freigegeben bzw. geöffnet ist, dann steht der Komponentenauslass 15 mit dem Komponenteneinlass 13 in Verbindung und die reaktive Komponente kann aus dem Komponentenauslass 15 ausströmen. Zwischen dem vorderen Abschnitt 22 der Düsennadel 20 und dem ersten Gehäuseelement 11 ist ein Komponentenraum 16 gebildet, durch den die Komponente vom Komponenteneinlass 13 zum Komponentenauslass 15 strömen kann.

Das hintere Ende der Düsennadel 20 hat einen größeren Durchmesser als die anderen Abschnitte der Düsennadel 20 und kann auch als Wirkabschnitt 23 bezeichnet werden. Dieser Wirkabschnitt 23 legt in Verbindung mit einer am hinteren Ende der Düsennadel 20 befestigten Membrandichtung 30 und dem ersten Gehäuseelement 11 einen Wirkraum 17 fest. Der Ausgestaltung des hinteren Abschnitts der Düsennadel 20 entsprechend ist der Innendurchmesser des ersten Gehäuseelements 11 im Bereich des Wirkabschnitts 17 etwas größer ausgebildet als der Außendurchmesser des Wirkabschnitts 23. Der Übergang von dem vergrößerten Durchmesser zu dem Durchmesser, in dem eine Gleitlagerung bzw. Führung der Düsennadel 20 erfolgt, ist stufenförmig. Der Wirkabschnitt muss jedoch nicht unbedingt einen größeren Durchmesser haben als der Führungsdurchmesser der Nadel.

Die Befestigung der Membrandichtung 30 ist im vorliegenden Fall durch eine Schraubverbindung verwirklicht. Die Düsennadel 20 befindet sich somit vollständig auf einer Seite der Membrandichtung 30. Bei dem Ausführungsbeispiel ist die Membrandichtung 30 eine Sickenmembran, die zwischen dem ersten Gehäuseelement 11 und dem zweiten Gehäuseelement 12 geklemmt ist. Die Membrandichtung 30 unterteilt das Gehäuse somit in eine Komponentenseite und eine Gegendruckseite. Im ersten Gehäuseelement 11 ist zudem eine Ausnehmung 18 ausgeformt, in die die Wölbung 31 der Sickenmembran ragt. Bei einer Bewegung des Verschlusskörpers in Schließrichtung gelangt die Sickenmembran im Bereich dieser Wölbung in Kontakt mit einer sich radial erstreckenden Fläche der Ausnehmung. Dadurch wird die Sickenmembran gestützt und kann hohen Drücken standhalten. Vor allem bei einseitiger Druckbeaufschlagung wird die Membran so hinterstützt.

Des Weiteren ist in dem zweiten Gehäuseelement 12 ein Fluidkanal 121 ausgebildet, der in einen durch die Membrandichtung 30 und das zweite Gehäuseelement 12 festgelegten Druckraum 19 mündet. Bei diesem Ausführungsbeispiel ist eine Anordnung gezeigt, bei der der Fluidkanal 121 ein Gewinde aufweist in das das Ende eines Fluidanschlusses 40 geschraubt ist. In diesem Fluidanschluss 40 ist bei dem Ausführungsbeispiel eine Drossel vorgesehen. Der Fluidanschluss 40 kann mit einer Hydraulik oder Pneumatik verbunden sein, damit dem Druckraum 19 ein druckbeaufschlagtes Fluid zugeführt werden kann. Um die Komponentenzufuhrdüse so kompakt wie möglich zu gestalten, sind bei dem vorliegenden Ausführungsbeispiel der Fluidkanal 121 und die Schraube 50 zum Befestigen der Membrandichtung 30 an der Düsennadel auf einer Achse angeordnet und ist der Durchmesser des Fluidkanals 121 zumindest auf der dem Druckraum 19 zugewandten Seite größer als der Durchmesser des Schraubenkopfes ausgebildet. Somit kann der Schraubenkopf in den Fluidkanal 121 eintauchen, wodurch die Länge der Komponentenzufuhrdüse verringert werden kann. Für eine optimale Funktion ist des Weiteren ein Anpressteller 51 zwischen Schraube 50 und Membrandichtung 30 vorgesehen. Dieser Anpressteller 51 gelangt mit dem zweiten Gehäuseelement 12 in Kontakt, wenn die Düsennadel 20 eine Position erreicht, bei der der Komponentenauslass 15 maximal geöffnet ist. Um eine möglichst gute Fluidzufuhr in den Druckraum 19 zu gewährleisten, sind in dem Anpressteller 51 auf der der Membrandichtung 30 abgewandten Seite radial von innen nach außen verlaufende Nuten ausgebildet.

Um eine möglichst gute Verteilung der Komponente auf der Komponentenseite der Membrandichtung 30 zu erreichen, ist in der Düsennadel 20 eine Bohrung 24 vorgesehen, die den Wirkraum 18 mit dem Komponentenraum 16 verbindet. Alternativ kann die Bohrung jedoch auch weggelassen werden und stattdessen wenigstens eine Nut in der Düsennadel vorgesehen sein, die den Komponentenraum 16 mit dem Wirkraum 18 verbindet.

Somit ist eine Komponentenzufuhrdüse mit verbessertem Ansprechverhalten geschaffen, die auch auf kleine Druckänderungen äußerst präzise reagiert.

## Patentansprüche

1. Komponentenzufuhrdüse mit
einem Gehäuse (11, 12), das einen Komponenteneinlass (13) und einen Komponentenauslass (15) aufweist,
einem kolbenförmigen Verschlusskörper (20), der in dem Gehäuse zwischen zwei Positionen axial hin- und herverschieblich gelagert ist, wobei in einer ersten Position der Komponentenauslass (15) durch das vordere Ende (22) des Verschlusskörpers (20) verschlossen ist und in einer zweiten Position der Komponentenauslass (15) freigegeben bzw. geöffnet ist,
**gekennzeichnet durch**
eine Membrandichtung (30), die am hinteren Ende des Verschlusskörpers (20) und am Gehäuse (11, 12) befestigt ist, so dass sich der Verschlusskörper (20) vollständig auf einer Seite der Membrandichtung (30) befindet, wobei das Gehäuse (11, 12) und/oder der Verschlusskörper (20) so ausgebildet sind, dass die Komponente an die Membran gelangen kann und somit der Komponentendruck auf der kompletten Wirkfläche der Membran anliegen kann, wobei der Verschlusskörper (20) einen Führungsabschnitt (21), der in dem Gehäuse (11) gleitgelagert ist, einen komponentenauslassseitigen Verschlussabschnitt (22), der mit dem Gehäuse (11) einen Komponentenraum (16) festlegt, und einen am hinteren Ende des Verschlusskörpers (20) ausgeformten Wirkabschnitt (23) aufweist, der mit dem Gehäuse (11) und der Membrandichtung (30) einen Wirkraum (18) festlegt, wobei der Komponentenraum (16) und der Wirkraum (18) fluidverbunden sind.

2. Komponentenzufuhrdüse nach Anspruch 1, wobei an dem Führungsabschnitt (21) keine Dichtung vorgesehen ist.

3. Komponentenzufuhrdüse nach Anspruch 1 oder 2, wobei der Verschlusskörper (20) im Bereich des Führungsabschnitts (21) wenigstens eine axiale Nut aufweist, die den Komponentenraum (16) mit dem Wirkraum (18) verbindet.

4. Komponentenzufuhrdüse nach einem der Ansprüche 1 bis 2, wobei der Verschlusskörper (20) wenigstens eine Bohrung (24) aufweist, die den Komponentenraum (16) mit dem Wirkraum (18) verbindet.

5. Komponentenzufuhrdüse nach einem der Ansprüche 1 bis 4, wobei die dem Wirkraum (18) entgegengesetzte Seite der Membrandichtung (30) mit dem Gehäuse (12) einen Druckraum (19) festlegt und in dem Gehäuse (12) ein in den Druckraum (19) mündender Fluidkanal (121) ausgebildet ist.

6. Komponentenzufuhrdüse nach Anspruch 5, wobei in dem Fluidkanal (121) eine Drossel vorgesehen ist.

7. Komponentenzufuhrdüse nach einem der Ansprüche 1 bis 6, wobei die Membrandichtung (30) eine Sickenmembran oder eine Rollmembran ist.

8. Komponentenzufuhrdüse nach Anspruch 7, wobei das Gehäuse (11) eine ringförmige Ausnehmung (18) aufweist, in die ein gewölbter Abschnitt (31) der Membrandichtung (30) ragt, wobei die Ausnehmung (18) derart ausgestaltet ist, dass sich der gewölbte Abschnitt (31) an einer sich in radialer Richtung erstreckenden Fläche der Ausnehmung (18) anlegen kann.

9. Komponentenzufuhrdüse nach einem der Ansprüche 1 bis 7, wobei das Gehäuse ein erstes Gehäuseelement (11) und ein zweites Gehäuseelement (12) aufweist, wobei das erste Gehäuseelement (11) den Komponenteneinlass (13) und den Komponentenauslass (15) aufweist und den Verschlusskörper (20) in sich aufnimmt und das zweite Gehäuseelement (12) eine dem Komponentenauslass (15) gegenüberliegende Öffnung des ersten Gehäuseelements (11) verschließt, wobei die Membrandichtung (30) zwischen dem ersten und dem zweiten Gehäuseelement gehalten ist.

## Claims

1. A component feed nozzle with
a housing (11, 12), which has a component inlet (13) and a component outlet (15),
a piston-shaped closing body (20), which is mounted in the housing so as to be movable back and forth axially between two positions, wherein, in a first position, the component outlet (15) is closed by the front end (22) of the closing body (20) and, in a second position, the component outlet (15) is released or respectively opened,
**characterized by**
a membrane seal (30), which is fastened to the rear end of the closing body (20) and to the housing (11, 12) so that the closing body (20) is situated completely on one face of the membrane seal (30), wherein the housing (11, 12) and/or the closing body (20) are designed so that the component can reach the membrane and thus the component pressure can be applied to the complete effective surface of the membrane, wherein the closing body (20) has a guide section (21), which is slidably mounted in the housing (11), a closing section (22) on the component outlet side which, with the housing (11), constitutes a component chamber (16), and an effective section (23) formed at the rear end of the closing body (20), which with the housing (11) and the membrane seal (30) constitutes an effective chamber (18), wherein the component chamber (16) and the effective chamber (18) are fluidically connected.

2. The component feed nozzle according to Claim 1, wherein no seal is provided on the guide section (21).

3. The component feed nozzle according to Claim 1 or 2, wherein the closing body (20) has in the region of the guide section (21) at least one axial groove, which connects the component chamber (16) with the effective chamber (18).

4. The component feed nozzle according to one of Claims 1 to 2, wherein the closing body (20) has at least one bore (24), which connects the component chamber (16) with the effective chamber (18).

5. The component feed nozzle according to one of Claims 1 to 4, wherein the face of the membrane seal (30) opposed to the effective chamber (18) constitutes with the housing (12) a pressure chamber (19), and a fluid duct (121), opening into the pressure chamber (19), is formed in the housing (12).

6. The component feed nozzle according to Claim 5, wherein a throttle is provided in the fluid duct (121) .

7. The component feed nozzle according to one of Claims 1 to 6, wherein the membrane seal (30) is a crimped membrane or a roll membrane.

8. The component feed nozzle according to Claim 7, wherein the housing (11) has an annular recess (18), into which a curved section (31) of the membrane seal (30) projects, wherein the recess (18) is configured such that the curved section (31) can lie against a surface of the recess (18) extending in radial direction.

9. The component feed nozzle according to one of Claims 1 to 7, wherein the housing has a first housing element (11) and a second housing element (12), wherein the first housing element (11) has the component inlet (13) and the component outlet (15) and receives the closing body (20) in itself, and the second housing element (12) closes an opening of the first housing element (11) lying opposite the component outlet (15), wherein the membrane seal (30) is held between the first and the second housing element.

## Revendications

1. Buse d'alimentation pour des composants comprenant un logement (11, 12) qui présente une entrée de composants (13) et une sortie de composants (15),
un corps de fermeture (20) en forme de piston qui est disposé mobile axialement d'avant en arrière entre deux positions dans le logement, dans laquelle dans une première position, la sortie de composants (15) est fermée par l'extrémité avant (22) du corps de fermeture (20) et dans une seconde position, la sortie de composants (15) est libérée, respectivement ouverte,
**caractérisée par**
un joint à membrane (30) qui est fixé sur l'extrémité arrière du corps de fermeture (20) et sur le logement (11, 12), de façon à ce que le corps de fermeture (20) se trouve complètement sur un côté du joint à membrane (30), dans laquelle le logement (11, 12) et/ou le corps de fermeture (20) sont ainsi formés que le composant peut arriver sur la membrane et qu'ainsi la pression du composant peut s'exercer sur la surface active complète de la membrane,
dans laquelle le corps de fermeture (20) présente un tronçon de guidage (21) qui est agencé coulissant dans le logement (11), un tronçon de fermeture (22) côté sortie de composants qui détermine un espace de composants (16) avec le logement (11), et un tronçon actif (23) formé sur l'extrémité arrière du corps de fermeture (20), qui détermine un espace actif (18) avec le logement (11) et le joint à membrane (30), dans laquelle l'espace de composants (16) et l'espace actif (18) sont reliés fluidiquement.

2. Buse d'alimentation pour des composants selon la revendication 1, dans laquelle aucun joint n'est prévu sur le tronçon de guidage (21).

3. Buse d'alimentation pour des composants selon la revendication 1 ou 2, dans laquelle le corps de fermeture (20) présente au moins une encoche axiale au niveau du tronçon de guidage (21), qui relie l'espace de composants (16) à l'espace actif (18).

4. Buse d'alimentation pour des composants selon l'une des revendications 1 à 2, dans laquelle le corps de fermeture (20) présente au moins un alésage (24) qui relie l'espace de composants (16) à l'espace actif (18) .

5. Buse d'alimentation pour des composants selon l'une des revendications 1 à 4, dans laquelle le côté du joint à membrane (30) opposé à l'espace actif (18) détermine avec le logement (12) un espace de pression (19), et un canal fluidique (121) débouchant dans l'espace de pression (19) est formé dans le logement (12) .

6. Buse d'alimentation pour des composants selon la revendication 5, dans laquelle un étranglement est prévu dans le canal fluidique (121).

7. Buse d'alimentation pour des composants selon l'une des revendications 1 à 6, dans laquelle le joint à membrane (30) est une membrane à moulure ou une membrane à rouleau.

8. Buse d'alimentation pour des composants selon la revendication 7, dans laquelle le logement (11) présente un évidement (18) annulaire dans lequel un tronçon (31) bombé du joint à membrane (30) fait saillie, dans laquelle l'évidement (18) est ainsi formé que le tronçon (31) bombé peut se poser sur une surface de l'évidement (18) s'étendant dans le sens radial.

9. Buse d'alimentation pour des composants selon l'une des revendications 1 à 7, dans laquelle le logement présente un premier élément de logement (11) et un second élément de logement (12), dans laquelle le premier élément de logement (11) présente l'entrée de composants (13) et la sortie de composants (15) et reçoit à l'intérieur le corps de fermeture (20), et le second élément de logement (12) ferme une ouverture du premier élément de logement (11) opposée à la sortie de composants (15), dans laquelle le joint à membrane (30) est maintenu entre les premier et second éléments de logement.
